(19) Europäisches Patentamt
European Patent Office
Office européen des brevets

(11) **EP 4 047 028 A1**

(12) **EUROPEAN PATENT APPLICATION**
published in accordance with Art. 153(4) EPC

(43) Date of publication:
**24.08.2022 Bulletin 2022/34**

(21) Application number: **20876728.5**

(22) Date of filing: **06.07.2020**

(51) International Patent Classification (IPC):
**C08F 220/18** *(2006.01)*    **C08L 29/04** *(2006.01)*
**C08L 33/08** *(2006.01)*    **C09K 3/10** *(2006.01)*
**F16L 11/04** *(2006.01)*

(52) Cooperative Patent Classification (CPC):
**C08F 220/18; C08L 29/04; C08L 33/08; C09K 3/10;
F16L 11/04**

(86) International application number:
**PCT/JP2020/026387**

(87) International publication number:
**WO 2021/075092 (22.04.2021 Gazette 2021/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.10.2019 JP 2019189529
16.10.2019 JP 2019189538
16.10.2019 JP 2019189546**

(71) Applicant: **Denka Company Limited
Tokyo 103-8338 (JP)**

(72) Inventors:
• **NAKANO Tatsuya
Tokyo 103-8338 (JP)**
• **MIYAUCHI Toshiaki
Tokyo 103-8338 (JP)**

(74) Representative: **Hoffmann Eitle
Patent- und Rechtsanwälte PartmbB
Arabellastraße 30
81925 München (DE)**

(54) **ACRYLIC RUBBER, RUBBER COMPOSITION AND CROSSLINKED PRODUCT THEREOF, RUBBER HOSE, AND SEAL PART**

(57) An aspect of the present invention is an acrylic rubber containing only an alkyl acrylate, ethylene and a crosslinking monomer as monomer units, wherein a content of a polyvinyl alcohol in the acrylic rubber is 0.5 to 2% by mass.

EP 4 047 028 A1

## Description

### Technical Field

The present invention relates to an acrylic rubber, a rubber composition and a crosslinked product thereof, a rubber hose, and a seal member.

### Background Art

Acrylic rubbers and crosslinked products thereof are excellent in physical properties such as heat resistance, oil resistance, and mechanical properties, and thus are used, for example, as materials for hoses, sealing members, and the like in engine rooms of automobiles. For example, Patent Document 1 discloses, as an acrylic rubber having excellent oil resistance and a good balance between cold resistance and heat resistance, an acrylic rubber comprising 0.1 to 10% by weight of ethylene monomer units, 0 to 10% by weight of crosslinking monomer units, and 99.9 to 80% by weight of ethyl acrylate and butyl acrylate monomer units, wherein the proportion of ethyl acrylate in the total of ethyl acrylate and butyl acrylate is 60 to 100% by weight.

### Citation List

### Patent Document

[Patent Document 1] Japanese Unexamined Patent Application Publication No. 2001-098032

### Summary of Invention

### Technical Problem

In recent years, acrylic rubbers have been required to have properties such as water resistance and copper damage resistance, which have not been considered so far, in addition to the above-described heat resistance and the like. That is, it is desirable that the acrylic rubber has a small volume change when contacting with water (excellent water resistance), and it is desirable that the acrylic rubber has a small change in characteristics (for example, elongation) due to copper when used together with a member formed of copper (excellent copper damage resistance).
An object of one aspect of the present invention is to provide an acrylic rubber capable of achieving both water resistance and copper damage resistance.

### Solution to Problem

The present inventors have found that the content of the polyvinyl alcohol in the acrylic rubber affects water resistance and copper damage resistance of the acrylic rubber. That is, it has been found that even if the monomer composition of the acrylic rubber is the same, the copper damage resistance of the acrylic rubber is improved when the acrylic rubber contains a certain amount of the polyvinyl alcohol, whereas the water resistance is lowered when the content of the polyvinyl alcohol in the acrylic rubber is too large. Therefore, in an acrylic rubber having the same monomer composition, it is important to set the content of the polyvinyl alcohol in the acrylic rubber within the specific range in order to achieve both water resistance and copper damage resistance of the acrylic rubber (not to excessively deteriorate either one of them).
An aspect of the present invention is an acrylic rubber containing only an alkyl acrylate, ethylene and a crosslinking monomer as monomer units, wherein a content of a polyvinyl alcohol in the acrylic rubber is 0.5 to 2% by mass.
The alkyl acrylate may contain: at least one selected from the group consisting of alkyl acrylates having an alkyl group having 1 to 3 carbon atoms; and at least one selected from the group consisting of alkyl acrylates having an alkyl group having 4 to 8 carbon atoms. The alkyl acrylate may contain ethyl acrylate and butyl acrylate.
A content of the alkyl acrylate may be 85 to 99% by mass based on a total amount of the monomer units. A content of the ethylene may be 0.5 to 5% by mass based on a total amount of the monomer units.
The crosslinking monomer may be a crosslinking monomer having an epoxy group. The crosslinking monomer may be a crosslinking monomer having a carboxyl group. A content of the crosslinking monomer may be 0.5 to 10% by mass based on a total amount of the monomer units.
Another aspect of the present invention is a rubber composition containing the acrylic rubber described above. Another aspect of the present invention is a crosslinked product of the rubber composition. Another aspect of the present invention is a rubber hose containing the crosslinked product. Another aspect of the present invention is a seal member containing the crosslinked product.

**Advantageous Effects of Invention**

According to an aspect of the present invention, an acrylic rubber capable of achieving both water resistance and copper damage resistance may be provided.

**Description of Embodiments**

One embodiment of the present invention is an acrylic rubber containing only an alkyl acrylate, ethylene and a crosslinking monomer as monomer units.

The alkyl acrylate serves as a skeleton of the acrylic rubber. The alkyl acrylate contains, for example, one or two or more alkyl acrylates having an alkyl group having 1 to 8 carbon atoms. The alkyl group may be linear or branched.

The content of the alkyl acrylate may be 85% by mass or more, 90% by mass or more, or 95% by mass or more, and 99% by mass or less, 98% by mass or less, or 97% by mass or less, and may be 85 to 99% by mass, 85 to 98% by mass, 85 to 97% by mass, 90 to 99% by mass, 90 to 98% by mass, 90 to 97% by mass, 95 to 99% by mass, 95 to 98% by mass, or 95 to 97% by mass, based on the total amount of monomer units contained in the acrylic rubber.

The alkyl acrylate, for example, may contain an alkyl acrylate having alkyl groups having 1 to 3 carbon atoms (hereinafter also referred to as "C1-C3 alkyl acrylate") and may contain an alkyl acrylate having alkyl groups having 4 to 8 carbon atoms (hereinafter also referred to as "C4-C8 alkyl acrylate").

Examples of the C1-C3 alkyl acrylates include methyl acrylate, ethyl acrylate, and n-propyl acrylate. From the viewpoint of improving the tensile strength of the acrylic rubber, the alkyl acrylate contains preferably at least one selected from the group consisting of methyl acrylate and ethyl acrylate, and more preferably ethyl acrylate.

The content of the C1-C3 alkyl acrylate may be 20% by mass or more, 40% by mass or more, or 60% by mass or more, may be 90% by mass or less, 80% by mass or less, or 70% by mass or less, and may be 20 to 90% by mass, 20 to 80% by mass, 20 to 70% by mass, 40 to 90% by mass, 40 to 80% by mass, 40 to 70% by mass, 60 to 90% by mass, 60 to 80% by mass, or 60 to 70% by mass, based on the total amount of the monomer units contained in the acrylic rubber.

Examples of the C4-C8 alkyl acrylate include n-butyl acrylate, isobutyl acrylate, n-pentyl acrylate, isoamyl acrylate, n-hexyl acrylate, 2-methylpentyl acrylate, n-octyl acrylate, and 2-ethylhexyl acrylate. From the viewpoint of improving cold resistance of the acrylic rubber, the alkyl acrylate contains preferably butyl acrylate, and more preferably n-butyl acrylate.

The content of C4-C8 alkyl acrylate may be 5% by mass or more, 15% by mass or more, or 25% by mass or more, may be 70% by mass or less, 50% by mass or less, or 30% by mass or less, and may 5 to 70% by mass, 5 to 60% by mass, 5 to 30% by mass, 15 to 70% by mass, 15 to 50% by mass, 15 to 30% by mass, 25 to 70% by mass, 25 to 50% by mass, or 25 to 30% by mass, based on the total amount of the monomer units contained in the acrylic rubber.

The alkyl acrylate preferably contains at least one selected from the group consisting of the C1-C3 alkyl acrylates and at least one selected from the group consisting of the C4-C8 alkyl acrylates, more preferably contains ethyl acrylate and butyl acrylate, and still more preferably contains ethyl acrylate and n-butyl acrylate.

The content of the ethylene may be 0.5% by mass or more, 1% by mass or more, or 1.5% by mass or more, may be 5% by mass or less, 3% by mass or less, or 2% by mass or less, and may be 0.5 to 5% by mass, 0.5 to 3% by mass, 0.5 to 2% by mass, 1 to 5% by mass, 1 to 3% by mass, 1 to 2% by mass, 1.5 to 5% by mass, 1.5 to 3% by mass, or 1.5 to 2% by mass, based on the total amount of monomer units contained in the acrylic rubber.

The crosslinking monomer is a monomer that is copolymerizable with the alkyl acrylate and ethylene, and has a functional group that forms a crosslinking site (also referred to as a crosslinking point). The crosslinking monomer has a polymerizable carbon-carbon double bond and has, for example, an acryloyl group, a methacryloyl group, an allyl group, a methallyl group, a vinyl group, or an alkenylene group. Examples of the functional group include an epoxy group, a carboxyl group, and an active chlorine group. The crosslinking monomer may have one or two or more of these functional groups.

In one embodiment, the crosslinking monomer has, as the functional group, preferably an epoxy group, more preferably a glycidyl group. Examples of the crosslinking monomer having an epoxy group include glycidyl acrylate, glycidyl methacrylate, allyl glycidyl ether, and methallyl glycidyl ether.

In another embodiment, the crosslinking monomer preferably has a carboxyl group as the functional group. The number of carboxyl groups in the crosslinking monomer may be one, two, or three or more. Examples of the crosslinking monomer having a carboxyl group include acrylic acid, methacrylic acid, crotonic acid, 2-pentenoic acid, maleic acid, fumaric acid, itaconic acid, and a monoalkyl maleate.

Examples of the crosslinking monomer having an active chlorine group include 2-chloroethyl vinyl ether, 2-chloroethyl acrylate, vinylbenzyl chloride, vinyl chloroacetate, and allyl chloroacetate.

The content of the crosslinking monomer may be 0.5% by mass or more, 0.8% by mass or more, or 1% by mass or more, may be 10% by mass or less, 5% by mass or less, or 3% by mass or less, and may be 0.5 to 10% by mass, 0.5 to 5% by mass, 0.5 to 3% by mass, 0.8 to 10% by mass, 0.8 to 5% by mass, 0.8 to 3% by mass, 1 to 10% by mass, 1 to 5% by mass, or 1 to 3% by mass, based on the total amount of the monomer units contained in the acrylic rubber.

The acrylic rubber is obtained by copolymerizing the monomers described above by a known method such as an emulsion polymerization or a suspension polymerization, and more specifically, for example, is obtained by the following method.

First, a monomer mixture containing the alkyl acrylate and a crosslinking monomer is mixed with an aqueous solution of a polyvinyl alcohol in a reactor to prepare a suspension. Subsequently, after the inside of the reactor is replaced with nitrogen gas, ethylene is injected into the reactor at a pressure of, for example, 0.5 to 5MPa. Thereafter, a polymerization initiator is added to the suspension while stirring the suspension to initiate polymerization, and the polymerization is allowed to proceed, for example, at 40 to 100°C for 1 to 24 hours. An aqueous sodium borate solution (coagulant) is added to the obtained copolymer to solidify the copolymer, and then washing, dehydrating and drying processes of the copolymer with water are performed in this order to obtain an acrylic rubber.

The amount of the polyvinyl alcohol added, for example, may be 0.1 parts by mass or more and may be 10 parts by mass or less, with respect to 100 parts by mass of the total amount of the monomers constituting the acrylic rubber. The polyvinyl alcohol may be a completely saponified polyvinyl alcohol or a partially saponified polyvinyl alcohol, and is preferably a partially saponified polyvinyl alcohol from the viewpoint of easily adjusting the content of the polyvinyl alcohol in the acrylic rubber to the range described below. The degree of saponification of the polyvinyl alcohol is preferably 60% by mole or more, more preferably 70% by mole or more, and even more preferably 80% by mole or more, and is preferably 100% by mole or less, more preferably 99% by mole or less, and even more preferably 90% by mole or less, from the viewpoint of easily adjusting the content of the polyvinyl alcohol-type emulsifier in the acrylic rubber to the range described below. The saponification degree of the polyvinyl alcohol means a value measured in accordance with JIS K6726 "3.5 Saponification degree".

A pH adjusting agent may be further added to the suspension. The pH adjuster may be, for example, an alkali metal salt such as sodium acetate, sodium hydroxide, potassium hydroxide, sodium phosphate, or sodium citrate, and is preferably sodium acetate. The amount of the pH adjuster added, for example, may be 0.1 parts by mass or more, and may be 5 parts by mass or less, with respect to 100 parts by mass of the total amount of monomers constituting the acrylic rubber.

The polymerization initiator may be, for example, an azo compound such as azobisisobutyronitrile, an organic peroxide such as tert-butyl hydroperoxide, cumene hydroperoxide, and benzoyl peroxide, or an inorganic peroxide such as sodium persulfate or ammonium persulfate, and is preferably tert-butyl hydroperoxide. The amount of the polymerization initiator added, for example, may be 0.01 parts by mass or more, and may be 2 parts by mass or less, with respect to 100 parts by mass of the total amount of the monomers constituting the acrylic rubber.

The solidified copolymer is washed with water in order to adjust the content of the polyvinyl alcohol in the finally obtained acrylic rubber. Specifically, for example, water is added to the copolymer, and the copolymer and water are mixed for a specific period of time to perform washing. The content of the polyvinyl alcohol in the acrylic rubber can be adjusted by the temperature of the water used for washing. The higher the temperature of the water, the lower the content of polyvinyl alcohol in the acrylic rubber.

In order to adjust the content of the polyvinyl alcohol in the acrylic rubber to the range described below, the temperature of the water is preferably higher than 10°C, more preferably 20°C or higher, even more preferably 30°C or higher, and particularly preferably 40°C or higher, and is preferably 90°C or lower, more preferably 80°C or lower, even more preferably 70°C or lower, and particularly preferably 60°C or lower. The washing time, for example, may be 5 minutes or more, 10 minutes or more, or 20 minutes or more, and may be 1 hour or less, 50 minutes or less, or 40 minutes or less.

The content of the polyvinyl alcohol in the acrylic rubber obtained as described above, based on the total amount of the acrylic rubber. is 0.5% by mass or more from the viewpoint of excellent copper damage resistance, and is preferably 0.6% by mass or more, more preferably 0.8% by mass or more, still more preferably 1% by mass or more, and particularly preferably 1.1% by mass or more, from the viewpoint of further excellent copper damage resistance. The content of the polyvinyl alcohol in the acrylic rubber, based on the total amount of the acrylic rubber, is 2% by mass or less from the viewpoint of excellent water resistance, and is preferably 1.8% by mass or less, more preferably 1.6% by mass or less, still more preferably 1.4% by mass or less, and particularly preferably 1.3% by mass or less, from the viewpoint of further excellent water resistance.

The content of the polyvinyl alcohol in the acrylic rubber, based on the total amount of the acrylic rubber, is 0.5 to 2% by mass from the viewpoint of achieving both water resistance and copper damage resistance, and is preferably 0.5 to 1.8% by mass, 0.5 to 1.6% by mass, 0.5 to 1.4% by mass, 0.5 to 1.3% by mass, 0.6 to 2% by mass, 0.6 to 1.8% by mass, 0.6 to 1.6% by mass, 0.6 to 1.4% by mass, 0.6 to 1.3% by mass, 0.8 to 2% by mass, 0.8 to 1.8% by mass, 0.8 to 1.6% by mass, 0.8 to 1.4% by mass, 0.8 to 1.3% by mass, 1 to 2% by mass, 1 to 1.8% by mass, 1 to 1.6% by mass, 1 to 1.4% by mass, 1 to 1.3% by mass, 1.1 to 2% by mass, 1.1 to 1.8% by mass, 1.1 to 1.6% by mass, 1.1 to 1.4% by mass, or 1.1 to 1.3% by mass, from the viewpoint of further easily achieving both water resistance and copper damage resistance.

The content of the polyvinyl alcohol in the acrylic rubber is measured by a pyrolysis GC-MS. More specifically, the acrylic rubber is thermally decomposed at 550°C by a double shot pyrolyzer (PY-2020D manufactured by Frontier Laboratories Inc.), and crotonaldehyde, which is a decomposition product of polyvinyl alcohol, is quantitatively determined by gas chromatography mass spectrometry (JMS-DX303 manufactured by JEOL Ltd., agilent capillary column DB-5, carrier gas: helium, inlet temperature: 280°C, temperature rising condition: holding at 70°C for 2 minutes and then rising to 280°C at 12 °C/min) using an absolute calibration curve method, thereby measuring the content of the polyvinyl alcohol in the acrylic rubber.

In the acrylic rubber, a boron element derived from sodium borate used as a coagulant may remain. The content of the boron element in the acrylic rubber is preferably 200 ppm by mass or less, more preferably 150 ppm by mass or less, still more preferably 120 ppm by mass or less, and particularly preferably 100 ppm by mass or less, based on the total amount of the acrylic rubber. The content of boron is measured by ICP emission spectrometry.

The Mooney viscosity of the acrylic rubber, for example, may be 10 or more, 20 or more, or 30 or more, and may be 70 or less, 60 or less, or 50 or less. The Mooney viscosity of the acrylic rubber is a value measured in accordance with the method specified in JIS K6300, and specifically, refers to a value measured at 100°C after preheating for 1 minute and after 4 minutes from the start of rotation using an L-type rotor.

The acrylic rubber described above is used as a rubber composition in combination with other components as necessary. That is, another embodiment of the present invention is a rubber composition containing the above-described acrylic rubber (and other components used as necessary). The content of the acrylic rubber, for example, may be 50% by mass or more, 55% by mass or more, or 60% by mass or more, and may be 90% by mass or less, based on the total amount of the rubber composition.

Other components that may be contained in the rubber composition include, for example, a filler, a lubricant, an anti-aging agent, a surfactant, a crosslinking agent, and a crosslinking accelerator.

Examples of the filler include a carbon black, a silica, a talc, and calcium carbonate. The content of the filler, for example, may be 30 parts by mass or more, and may be 100 parts by mass or less, with respect to 100 parts by mass of the acrylic rubber.

Examples of the lubricant include a liquid paraffin, stearic acid, a stearylamine, a zinc fatty acid, a fatty acid ester, and an organosilicone. The content of the lubricant, for example, may be 0.1 parts by mass or more, and may be 10 parts by mass or less, with respect to 100 parts by mass of the acrylic rubber.

Examples of the anti-aging agent include an aromatic amine compound and a phenol compound. The content of the anti-aging agent, for example, may be 0.1 parts by mass or more, and may be 10 parts by mass or less, with respect to 100 parts by mass of the acrylic rubber.

Examples of the surfactant include an alkyl sulfate ester salt. The content of the surfactant, for example, may be 0.1 parts by mass or more, and may be 10 parts by mass or less, with respect to 100 parts by mass of the acrylic rubber.

Examples of the crosslinking agent include an imidazole compound and a diamine compound. The content of the crosslinking agent, for example, may be 0.1 parts by mass or more, and may be 10 parts by mass or less, with respect to 100 parts by mass of the acrylic rubber.

The crosslinking accelerator is preferably used when the rubber composition contains a crosslinking agent. Examples of the crosslinking accelerator include a trimethylthiourea compound, a phenothiazine compound, and a guanidine compound. The content of the crosslinking accelerator, for example, may be 0.1 parts by mass or more, and may be 10 parts by mass or less, with respect to 100 parts by mass of the acrylic rubber.

The rubber composition is suitably used in a crosslinked state (as a crosslinked product). That is, another embodiment of the present invention is a crosslinked product of the above rubber composition. The crosslinked product is obtained by crosslinking the rubber composition. In the crosslinked product, crosslinking between the acrylic rubbers is formed by crosslinking sites (crosslinking points) of the crosslinking monomer that is contained as the monomer units in the acrylic rubber. In this case, when the rubber composition contains a crosslinking agent, crosslinking between the acrylic rubbers is further formed by the crosslinking agent.

The method of crosslinking the rubber composition may be a known method, and may contain, for example, a first crosslinking step of heating and pressurizing the rubber composition, and a second crosslinking step of further heating the rubber composition after the first crosslinking step.

In the first crosslinking step, the heating temperature, for example, may be 150°C or more, and may be 220°C or less. The pressure of the pressurization, for example, may be 0.4 MPa or more, and may be 20 MPa or less. The heating and pressurizing time, for example, may be 5 minutes or more, and may be 2 hours or less.

In the second crosslinking step, the heating temperature, for example, may be 150°C or more, and may be 220°C or less. The heating time, for example, may be 30 minutes or more and may be 24 hours or less.

The crosslinked product of the rubber composition is particularly suitably used as a rubber hose or a seal member such as a gasket, a packing, and the like. That is, another embodiment of the present invention is a rubber hose or a seal member containing the crosslinked product. The rubber hose and the seal member may consist of only the crosslinked product of the rubber composition, or may contain the crosslinked product and another member.

Examples of the rubber hose include a transmission oil cooler hose, an engine oil cooler hose, an air duct hose, a turbo intercooler hose, a hot air hose, a radiator hose, a power steering hose, a fuel system hose, and a drain system hose for automobiles, construction machines, hydraulic equipment, and the like.

Examples of the seal member include an engine head cover gasket, an oil pan gasket, an oil seal, a lip seal packing, an O-ring, a transmission seal gasket, a crankshaft, a camshaft seal gasket, a valve stem, a power steering seal belt cover seal, a boot material for a constant-velocity joint, a rack-and-pinion boot material.

## Examples

Hereinafter, the present invention will be described in more detail with reference to examples, but the present invention is not limited to these examples.

A pressure-resistant reactor having an internal volume of 40 liters was charged with 11 kg of a monomer mixed liquid containing monomers shown in Tables 1 to 3 (excluding ethylene), 17 kg of 4% by mass of an aqueous polyvinyl alcohol solution (degree of saponification of the polyvinyl alcohol: 88% by mole), and 22 g of sodium acetate, and these were thoroughly mixed in advance with a stirrer to prepare uniform suspensions. Then, after the upper portion of the reactor was replaced with nitrogen, ethylene was injected into the upper portion of the reactor by 3 MPa. After stirring was continued and the temperature in the reactor was maintained at 55°C, 2 liters of an aqueous t-butyl hydroperoxide solution (0.25% by mass) was added to initiate polymerization. The temperature inside the reactor was maintained at 55°C, and the reaction was terminated after 6 hours. To the obtained copolymer, 7 liters of an aqueous sodium borate solution (3.5% by mass) was added to solidify the copolymer. Next, a step of adding 450 parts by mass of pure water having a temperature shown in Tables 1 to 3 to 100 parts by mass of the solidified copolymer, stirring the mixture in the reactor for 5 minutes, and discharging the water from the reactor was repeated 4 times to perform water washing. Thereafter, dehydration and drying were performed to obtain an acrylic rubber.

The compositions of the monomer units contained in the obtained acrylic rubbers are shown in Tables 1 to 3. The content of the monobutyl maleate monomer unit was measured by dissolving the acrylic rubber in toluene and performing neutralization titration using potassium hydroxide. The contents of the other monomer units were measured by nuclear magnetic resonance spectroscopy.

In addition, the content of the polyvinyl alcohol and boron in the obtained acrylic rubber and the Mooney viscosity ML (1+4) 100°C were measured. The results are shown in Tables 1 to 3.

The content of the polyvinyl alcohol in the acrylic rubber was measured by a pyrolysis GC-MS. More specifically, the acrylic rubber was thermally decomposed at 550°C by a double shot pyrolyzer (PY-2020D manufactured by Frontier Laboratories Inc.), and crotonaldehyde, which was a decomposition product of polyvinyl alcohol, was quantitatively determined by gas chromatography mass spectrometry (JMS-DX303 manufactured by JEOL Ltd., agilent capillary column DB-5, carrier gas: helium, inlet temperature: 280°C, temperature rising condition: holding at 70°C for 2 minutes and then rising to 280°C at 12 °C/min) using an absolute calibration curve method, thereby measuring the content of the polyvinyl alcohol in the acrylic rubber. The content of boron was measured by ICP emission spectrometry. The Mooney viscosity ML (1+4) 100°C was measured according to the method specified in JIS K6300.

Subsequently, each of the obtained acrylic rubbers and each component shown below were used in the compositions shown in Tables 1 to 3, and kneading was performed with an 8-inch open roll to obtain a rubber composition.

Filler: carbon black (Seast SO manufactured by Tokai Carbon Co., Ltd.)
Lubricant a: stearic acid (Lunac S-90 manufactured by Kao Corporation)
Lubricant b: stearylamine (Farmin 80 manufactured by Kao Corporation)
Anti-aging agent: 4,4'-bis($\alpha,\alpha$-dimethylbenzyl) diphenylamine (Naugard #445 manufactured by Addivant)
Surfactant: sodium laurylsulfate (Emal 0 manufactured by Kao Corporation)
Crosslinking agent a: 1-(2-cyanoethyl)-2-methylimidazole (CN-25 manufactured by Shikoku Chemicals Corporation)
Crosslinking agent b: 2,2-bis[4-(4-aminophenoxy) phenyl] propane (BAPP manufactured by Wakayama Seika Kogyo Co., Ltd.)
Crosslinking accelerator a: ammonium benzoate (VALKNOCK AB manufactured by Ouchi Shinko Chemical Industrial Co., Ltd.)
Crosslinking accelerator b: 1,3-di-o-tolylguanidine (NOCCELER DT manufactured by Ouchi Shinko Chemical Industrial Co., Ltd.)

The obtained rubber composition was dispensed into a sheet having a thickness of 2.4 mm, and then heated and pressurized at 170°C and 10 MPa for 20 minutes using a press vulcanizer. Subsequently, heating was carried out in a gear oven at 170°C for 4 hours to obtain a crosslinked product of the rubber composition.

(Evaluation of properties of crosslinked product)

The tensile strength and elongation of the crosslinked product were measured in accordance with JIS K6251-2010. Further, the hardness of the crosslinked product was measured using a type A durometer in accordance with JIS K6253-2006.

(Evaluation of water resistance)

In accordance with the "immersion test" of JIS K6258-2010, the crosslinked product was subjected to an immersion test with pure water, and the volume change rate of the crosslinked product before and after the test was calculated based on the following formula.

$$\text{Volume change rate (\%)} =$$

$$(\text{volume after test} - \text{volume before test}) \,/\, \text{volume before test} \times 100$$

(Evaluation of copper damage resistance)

A crosslinked product molded into a No.3 dumbbell shape was used as a test piece. 5 g of a slurry obtained by mixing engine oil (Mobil 1 5W-30 manufactured by EMG Lubricanz Performance Materials Inc.) and copper powder (CE-1110 manufactured by Fukuda Metal Foil & Powder Co., Ltd.) at a ratio of engine oil / copper powder = 3/1 (mass ratio) was applied using a brush so as to completely cover the marked lines of the test piece, and dried at room temperature for 12 hours. Subsequently, the copper damage resistance test was performed by heating the test piece in a gear oven at 150°C for 500 hours. Thereafter, the copper-containing paste was peeled off from the test piece using a spatula, and the elongation of the test piece was measured in accordance with JIS K6251-2010. The elongation change rate (%) before and after the test was calculated based on the following formula.

$$\text{Elongation change rate (\%)} =$$

$$(\text{elongation after test} - \text{elongation before test}) \,/\, \text{elongation before test} \times 100$$

[Table 1]

| | | Comp. Example 1-1 | Example 1-1 | Example 1-2 | Example 1-3 | Comp. Example 1-2 |
|---|---|---|---|---|---|---|
| Monomer composition (parts by mass) | Ethyl acrylate | 88.6 | 88.6 | 88.6 | 88.6 | 88.6 |
| | n-Butyl acrylate | 8.5 | 8.5 | 8.5 | 8.5 | 8.5 |
| | Ethylene | 1.7 | 1.7 | 1.7 | 1.7 | 1.7 |
| | Glycidyl methacrylate | 1.22 | 1.22 | 1.22 | 1.22 | 1.22 |
| Temperature of pure water (°C) | | 95 | 70 | 50 | 30 | 10 |
| Content of polyvinyl alcohol (parts by mass) | | 0.3 | 0.5 | 1.1 | 1.7 | 2.2 |
| Content of boron (ppm by mass) | | 81 | 98 | 120 | 150 | 140 |
| Mooney viscosity | | 47 | 47 | 47 | 47 | 47 |

(continued)

|  |  | Comp. Example 1-1 | Example 1-1 | Example 1-2 | Example 1-3 | Comp. Example 1-2 |
|---|---|---|---|---|---|---|
| Composition of rubber composition (parts by mass) | Acrylic rubber | 100 | 100 | 100 | 100 | 100 |
|  | Filler | 50 | 50 | 50 | 50 | 50 |
|  | Lubricant a | 1 | 1 | 1 | 1 | 1 |
|  | Anti-aging agent | 1 | 1 | 1 | 1 | 1 |
|  | Surfactant | 1 | 1 | 1 | 1 | 1 |
|  | Crosslinking agent a | 1.4 | 1.4 | 1.4 | 1.4 | 1.4 |
|  | Crosslinking accelerator a | 0.3 | 0.3 | 0.3 | 0.3 | 0.3 |
| Properties of crosslinked product | Tensile strength (MPa) | 12.1 | 12.2 | 12.2 | 12.2 | 12 |
|  | Elongation (%) | 280 | 280 | 300 | 310 | 290 |
|  | Hardness | 65 | 65 | 65 | 66 | 65 |
| Water resistance | Volume change rate (%) | 8 | 9 | 11 | 13 | 15 |
| Copper damage resistance | Elongation change rate (%) | -53 | -45 | -37 | -26 | -24 |

[Table 2]

| | | Comp. Example 2-1 | Example 2-1 | Example 2-2 | Example 2-3 | Comp. Example 2-2 |
|---|---|---|---|---|---|---|
| Monomer composition (parts by mass) | Ethyl acrylate | 67.7 | 67.7 | 67.7 | 67.7 | 67.7 |
| | n-Butyl acrylate | 29.4 | 29.4 | 29.4 | 29.4 | 29.4 |
| | Ethylene | 1.6 | 1.6 | 1.6 | 1.6 | 1.6 |
| | Monobutyl maleate | 1.28 | 1.28 | 1.28 | 1.28 | 1.28 |
| Temperature of pure water (°C) | | 95 | 70 | 50 | 30 | 10 |
| Content of polyvinyl alcohol (parts by mass) | | 0.3 | 0.6 | 1.1 | 1.8 | 2.5 |
| Content of boron (ppm by mass) | | 24 | 98 | 70 | 150 | 140 |
| Mooney viscosity | | 45 | 45 | 45 | 45 | 45 |
| Composition of rubber composition (parts by mass) | Acrylic rubber | 100 | 100 | 100 | 100 | 100 |
| | Filler | 50 | 50 | 50 | 50 | 50 |
| | Lubricant a | 1 | 1 | 1 | 1 | 1 |
| | Lubricant b | 0.3 | 0.3 | 0.3 | 0.3 | 0.3 |
| | Anti-aging agent | 1 | 1 | 1 | 1 | 1 |
| | Crosslinking agent b | 0.8 | 0.8 | 0.8 | 0.8 | 0.8 |
| | Crosslinking accelerator b | 1 | 1 | 1 | 1 | 1 |
| Properties of crosslinked product | Tensile strength (MPa) | 10.7 | 10.6 | 10.5 | 10.9 | 10.1 |
| | Elongation (%) | 300 | 310 | 320 | 340 | 320 |
| | Hardness | 59 | 60 | 59 | 59 | 59 |
| Water resistance | Volume change rate (%) | 3 | 4 | 6 | 8 | 9 |
| Copper damage resistance | Elongation change rate (%) | -59 | -32 | -26 | -15 | -13 |

## [Table 2] (cont.)

| | | Example 2-4 | Example 2-5 | Example 2-6 | Example 2-7 |
|---|---|---|---|---|---|
| Monomer composition (parts by mass) | Ethyl acrylate | 67.3 | 29.2 | 77.5 | 77.3 |
| | n-Butyl acrylate | 29.2 | 67.3 | 19.1 | 18.9 |
| | Ethylene | 1.6 | 1.6 | 1.5 | 1.9 |
| | Monobutyl maleate | 1.95 | 1.95 | 1.91 | 1.9 |
| Temperature of pure water (°C) | | 50 | 50 | 50 | 50 |
| Content of polyvinyl alcohol (parts by mass) | | 1.1 | 1.1 | 1.1 | 1.1 |
| Content of boron (ppm by mass) | | 70 | 70 | 70 | 70 |
| Mooney viscosity | | 45 | 40 | 50 | 43 |
| Composition of rubber composition (parts by mass) | Acrylic rubber | 100 | 100 | 100 | 100 |
| | Filler | 50 | 50 | 50 | 50 |
| | Lubricant a | 1 | 1 | 1 | 1 |
| | Lubricant b | 0.3 | 0.3 | 0.3 | 0.3 |
| | Anti-aging agent | 1 | 1 | 1 | 1 |
| | Crosslinking agent b | 0.8 | 0.8 | 0.8 | 0.8 |
| | Crosslinking accelerator b | 1 | 1 | 1 | 1 |
| Properties of crosslinked product | Tensile strength (MPa) | 13.6 | 11.1 | 10.5 | 11.4 |
| | Elongation (%) | 160 | 160 | 300 | 350 |
| | Hardness | 72 | 58 | 66 | 64 |
| Water resistance | Volume change rate (%) | 6 | 5 | 8 | 7 |
| Copper damage resistance | Elongation change rate (%) | -29 | -25 | -31 | -33 |

As can be seen from Table 1, in the acrylic rubber in which the crosslinking monomer having an epoxy group is used as the crosslinking monomer, when the content of the polyvinyl alcohol in the acrylic rubber is within the specific range, both of the water resistance and copper damage resistance can be achieved (any one of them is not excessively deteriorated). Similarly, as can be seen from Table 2, in the acrylic rubber in which the crosslinking monomer having a carboxyl group is used as the crosslinking monomer, when the content of the polyvinyl alcohol in the acrylic rubber is within the specific range, both of the water resistance and copper damage resistance can be achieved (any one of them is not excessively deteriorated).

**Claims**

1. An acrylic rubber comprising only an alkyl acrylate, ethylene and a crosslinking monomer as monomer units, wherein a content of a polyvinyl alcohol in the acrylic rubber is 0.5 to 2% by mass.

2. The acrylic rubber according to claim 1, wherein the alkyl acrylate comprises:

   at least one selected from the group consisting of alkyl acrylates having an alkyl group having 1 to 3 carbon atoms; and
   at least one selected from the group consisting of alkyl acrylates having an alkyl group having 4 to 8 carbon atoms.

3. The acrylic rubber according to claim 2, wherein the alkyl acrylate comprises ethyl acrylate and butyl acrylate.

4. The acrylic rubber according to any one of claims 1 to 3, wherein a content of the alkyl acrylate is 85 to 99% by mass based on a total amount of the monomer units.

5. The acrylic rubber according to any one of claims 1 to 4, wherein a content of the ethylene is 0.5 to 5% by mass based on a total amount of the monomer units.

6. The acrylic rubber according to any one of claims 1 to 5, wherein the crosslinking monomer is a crosslinking monomer having an epoxy group.

7. The acrylic rubber according to any one of claims 1 to 5, wherein the crosslinking monomer is a crosslinking monomer having a carboxyl group.

8. The acrylic rubber according to any one of claims 1 to 7, wherein a content of the crosslinking monomer is 0.5 to 10% by mass based on a total amount of the monomer units.

9. A rubber composition comprising the acrylic rubber according to any one of claims 1 to 8.

10. A crosslinked product of the rubber composition according to claim 9.

11. A rubber hose comprising the crosslinked product according to claim 10.

12. A seal member comprising the crosslinked product according to claim 10.

## INTERNATIONAL SEARCH REPORT

| | International application No. |
|---|---|
| | PCT/JP2020/026387 |

**A. CLASSIFICATION OF SUBJECT MATTER**
Int. Cl. C08F220/18(2006.01)i, C08L29/04(2006.01)i, C08L33/08(2006.01)i,
C09K3/10(2006.01)i, F16L11/04(2006.01)i
FI: C08F220/18, C08L33/08, C08L29/04 Z, F16L11/04, C09K3/10 E
According to International Patent Classification (IPC) or to both national classification and IPC

**B. FIELDS SEARCHED**

Minimum documentation searched (classification system followed by classification symbols)
Int. Cl. C08F220/18, C08L29/04, C08L33/08, C09K3/10, F16L11/04

Documentation searched other than minimum documentation to the extent that such documents are included in the fields searched
Published examined utility model applications of Japan   1922-1996
Published unexamined utility model applications of Japan   1971-2020
Registered utility model specifications of Japan   1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-131223 A (DENKI KAGAKU KOGYO KABUSHIKI KAISHA) 15 May 2001, claims, paragraphs [0009], [0013], [0018], [0019], [0023], [0030], [0034], [0035], [0043], table 1, fig. 1 | 1-12 |
| A | WO 2007/102437 A1 (ASAHI GLASS CO., LTD.) 13 September 2007, entire text | 1-12 |
| A | JP 2011-245633 A (NOF CORP.) 08 December 2011, entire text | 1-12 |
| A | JP 2016-219511 A (HITACHI CHEMICAL CO., LTD.) 22 December 2016, entire text | 1-12 |

☒ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11.09.2020 | 24.09.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2020/026387

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-140433 A (DENKI KAGAKU KOGYO KABUSHIKI KAISHA) 03 August 2015, entire text | 1-12 |

**INTERNATIONAL SEARCH REPORT**
Information on patent family members

International application No.

PCT/JP2020/026387

| Patent Documents referred to in the Report | Publication Date | Patent Family | Publication Date |
|---|---|---|---|
| JP 2001-131223 A | 15.05.2001 | (Family: none) | |
| WO 2007/102437 A1 | 13.09.2007 | US 2009/0005507 A1 entire text EP 1992509 A1 KR 10-2008-0100183 A CN 101395020 A | |
| JP 2011-245633 A | 08.12.2011 | (Family: none) | |
| JP 2016-219511 A | 22.12.2016 | (Family: none) | |
| JP 2015-140433 A | 03.08.2015 | (Family: none) | |

Form PCT/ISA/210 (patent family annex) (January 2015)

**EP 4 047 028 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001098032 A